# EUROPEAN PATENT SPECIFICATION

(11) **EP 0 342 308 B1**
(45) Date of publication and mention of the grant of the patent: **29.12.1993**
(21) Application number: 89101124.9
(22) Date of filing: 23.01.1989
(51) Int. Cl.: B01D 35/00, B01D 19/00

(54) **Integrated separator for solid and gaseous contaminants in a fluid**
Integrierte Trennvorrichtung für in einem Fluid enthaltene feste und gasförmige Verunreinigungen
Séparateur intégré pour impuretés solides et gazéiformes dans un fluide

(30) Priority: 17.05.1988 JP 118180/88; 16.08.1988 JP 202682/88
(43) Date of publication of application: 23.11.1989
(73) Proprietor: MITSUBISHI OIL CO., LTD, Minato-ku Tokyo (JP)
(72) Inventor: Yano, Hisashi, Yokohama-shi Kanagawa (JP); Ihara, Hiroyuki, Yokohama-shi Kanagawa (JP); Yabumoto, Junsuke, Atsugi-shi Kanagawa (JP)
(74) Representative: Grünecker, Kinkeldey, Stockmair & Schwanhäusser Anwaltssozietät

(56) References cited:
- AT-A- 226 483
- DE-C- 1 064 752
- FR-A- 2 086 768
- US-A- 3 486 306
- US-A- 3 996 027
- US-A- 4 548 622

## Description

### BACKGROUND OF THE INVENTION

In industrial applications requiring the handling fluids such as water, lubricants, chemical solutions, liquid foodstuffs and so forth, often it is necessary to remove solid contaminants from the fluid. For this purpose, it has been common practice to employ a fiber filter or a centrifugal filter.

On the other hand, in order to prevent rust from forming and to prevent annoying noise in industrial water use, to prevent oil starvation in lubrication systems, to prevent inefficiency and inaccuracy in hydraulic systems and nonuniform quality in chemical or foodstuff materials, conventionally, devices employing buoyancy, vacuum and centrifugal force have been employed for removing gaseous contaminants, examples of which are disclosed in 4,548,622.

DE-A-1064752 discloses a degasing filter for motor-oil, in particular for aviation engines. The liquid is introduced into a cylindrical vortex flow chamber where it is first degased. Gas separated from the liquid rises to the top of the container where it is collected under the cap and from where it is removed through small ducts. The liquid is filtered after degassing.

No compact and integrated device has heretofore been known, however, which is capable of simultaneously removing both solid and gaseous contaminants in a fluid.

Such a device is particularly desirable though in the engine manufacturing industry. Moreover, as the rotational speed and output of automobile and motorcycle engines have lately been increased, the importance of removing gaseous as well as solid contaminants has increased. Excess gaseous contaminants in engine oil can cause serious difficulties, such as excess wear of lubricated parts due to oil starvation and a deterioration of the efficiency of the hydraulic valve lifters.

On the other hand, the space available inside the engine compartment is generally not sufficient to accommodate both an oil filter and a gas separator. Hence, an integrated separator is desired, both from a standpoint of space and in terms of weight.

### SUMMARY OF THE INVENTION

Accordingly, an object of the present invention is to provide a compact and integrated separator for removing both solid and gaseous contaminants from fluids, for example, from engine oil in which a vortex flow chamber for gas removal is combined with an oil filter for solid filtration.

More specifically, the invention provides a separator device for removing both solid and gaseous contaminants from fluids including a filter system and a wall defining a vortex flow chamber which has a plurality of pores formed in the wall to permit fluids stripped of gaseous contaminants to pass therethrough. A fluid introduction pipe introduces fluids into the vortex flow chamber in a tangential direction of the chamber before or after the filter system passes the fluids. The wall defining the vortex flow chamber has a plurality of pores for passing fluids. A gas removal pipe extending into the vortex flow chamber and disposed substantially at the axial center of the vortex flow chamber has a plurality of small pores formed therein for allowing gas-rich fluids to pass therethrough. An outlet passage passes fluids which have passed through the filter and vortex flow chamber system.

### BRIEF DESCRIPTION OF THE DRAWINGS

Fig. 1a is a cross-sectional view of an integrated separator constructed according to the present invention;
Fig. 1b shows a cross section of the separator of Fig. 1a taken along a line X-Y in Fig. 1a;
Fig. 2 is a cross-sectional view of another embodiment of an integrated separator of the invention; and
Fig. 3 is a schematic diagram of an engine lubricating system in which the present invention can advantageously be used.

### DESCRIPTION OF THE PREFERRED EMBODIMENTS

Referring to the accompanying drawings, preferred embodiments of the present invention will be described in detail.

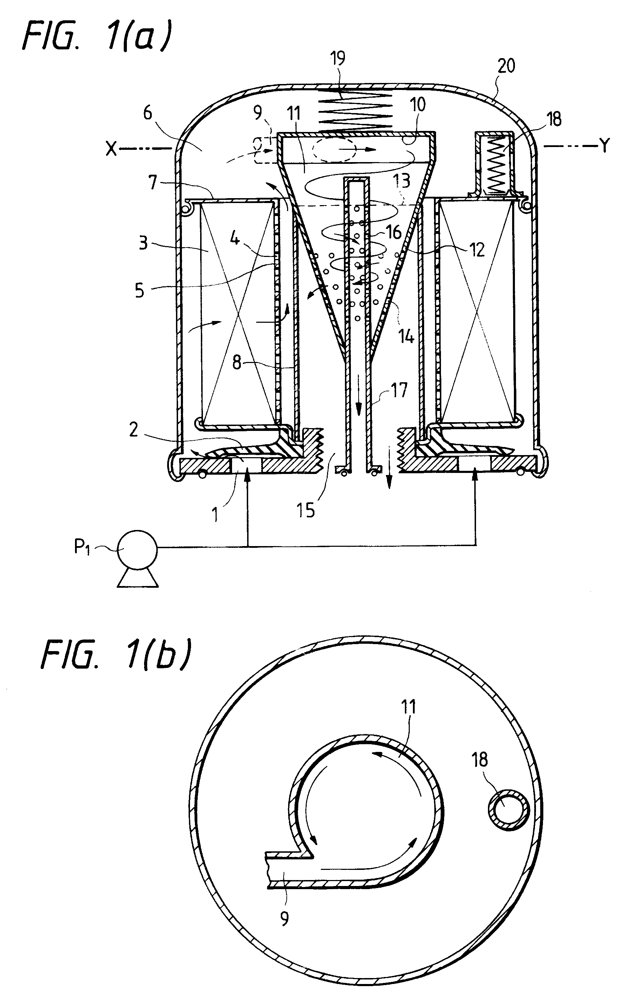

Fig. 1a shows a cross-sectional view of a separator for a four-cycle internal combustion engine, which separator is constructed in accordance with the present invention.

An oil pump P₁ pumps out oil containing solid and gaseous contaminants to the separator. The oil flow is introduced into the outside of the filter element 3 of the filter system through inlet holes 1 and a rubber check valve 2. The oil is filtered by the filter element 3 then flows out through many holes 4 formed in the cylindrical wall 5 of the filter system. The filtered oil then flows to an upper chamber 6 separated by an upper wall 7 of the filter system through the space formed between the cylindrical wall 5 of the filter system and an inner cylindrical wall 8 located inside the filter system. The oil flows into an inlet pipe 9 disposed tangentially near the bottom (in the flow direction) 10 of the vortex flow chamber 11. The conical wall 12 of the vortex flow chamber 11 is fixed at the edge 13 of the inner cylindrical wall 8. A portion of the oil flowing in a vortex pattern inside the conical wall 12 flows out through the pores 14 formed in the conical wall 12 at the part lower than the fixed edge 13, and the oil flows out of the device through the outlet 15.

Due to the vortical flow of the oil in the vortex flow chamber 11 and the resulting centrifugal force acting on the oil, oil containing gaseous contaminants collects near the axial center of the flow. The gas-rich oil moves radially inwardly through small pores 16 formed in a gas removal pipe 17 provided near the axial center of the vortex flow chamber 11. The gas removal pipe 17 passes through the top wall of the conical vortex flow chamber 11.

A relief valve 18 is disposed on the upper wall 7 of the filter system. A spring 19 is placed between the outside bottom of the vortex flow chamber 11 and the wall 20.

Fig. 1b shows a cross-sectional view of the separator of Fig. 1a taken along a line X-Y in Fig. 1a, specifically showing the region where the inlet pipe 9 extends tangentially into the vortex chamber 11.

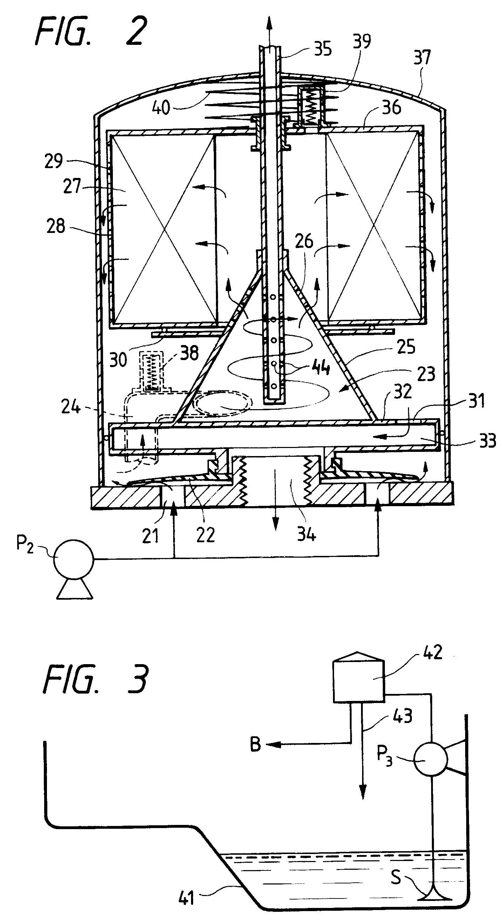

Fig. 2 shows a second preferred embodiment of the invention, also intended for use with a four-cycle internal combustion engine.

An oil pump P₂ pumps out oil containing solid and gaseous contaminants to the separator through inlet holes 21 and a rubber check valve 22. The oil flow is introduced tangentially into a vortex flow chamber 23, of which shape is conical, through an inlet pipe 24. A portion of the oil flowing in a vortex pattern inside the conical wall 25 flows out through the pores 26 formed in the conical wall 25 into a filter system which is disposed around the upper part of the conical vortex flow chamber 23 and on an annular plate 30 fixed around the conical wall 25. The oil is filtered by a filter element 27 and passes through small pores 28 formed in the outer wall 29 of the filter system and then flows out through the intermediate holes 31 formed in the upper plate 32 under which comprises hollow space 33 to pass the oil through the outlet hole 34.

Due to the vortical flow of the oil in the vortex flow chamber 23 and the resulting centrifugal force acting on the oil, oil containing gaseous contaminants collects near the axial center of the flow. The gas-rich oil moves radially inwardly through small pores 44 formed in a gas removal pipe 35 provided near the axial center of the vortex flow chamber 23.

The gas removal pipe 35 passes through the top of the conical vortex flow chamber 23, the upper wall 36 of the filter system and the outer wall 37. Two relief valves 38 and 39 are disposed in the inlet pipe 24 and the upper wall 36. A spring 40 is placed between the upper outer wall 37 and the upper wall 36 of the filter system.

Fig. 3 depicts schematically the connection of a separator device of the invention in a lubricating system of an engine.

Engine oil from an oil pan 41 is pumped by the oil pump P₃ through an oil screen S and supplied to a separator 42. Engine oil stripped of both solid and gaseous contaminants by the separator 42 is supplied to various parts B of an engine to be lubricated, and gas-rich oil is returned to the oil pan 41 through a gas removal pipe 43.

## Claims

1. Integrated separator for removing solid and gaseous contaminants from liquids, comprising a container (20,37) wherein a liquid de-gasing means comprising a vortex flow chamber (11,23) into which said liquid is introduced tangentially to impart a vortex flow to said liquid therein, and a central gas removal pipe (17, 35) and a filter system comprising a filter element (3,27) for removing solids from the liquid are disposed, characterised in that the vortex flow chamber (11,23) has a tapered shape and comprises a conical wall (12,25) and pores (14,26) in said conical wall (12,25) for passing through de-gased liquid from the conical vortex flow chamber (11,23) into a space within said container (20,37) outside of said vortex flow chamber (11,23), and said gas removal pipe (17,35) extends from the interior of the vortex flow chamber (11,23) through the wall of said vortex flow chamber (11,23) at its tapered end near the axial centre thereof, and comprises small pores (16,33) for passing through gas-rich liquid from the vortex flow chamber (11,23) into the interior of the gas removal pipe (17,35).
from the vortex flow chamber (11,23)
into the interior of the gas removal pipe (17,35).

2. Separator as claimed in claim 1,
characterized in that
the vortex flow chamber (11,23) has a substantially conical cross-section.

3. Separator as claimed in claims 1 or 2,
characterized in that
said filter system is disposed around said vortex flow chamber (11,23).

4. Separator as claimed in at least one of the preceding claims 1-3,
characterized in that
a relief valve (18,39) is connected to the filter system.

5. Separator as claimed in at least one of the preceding claims 1-4,
characterized in that
it comprises
inlet holes (1,21) in the bottom plate of the container (20,37) and a rubber check valve (2,22),
a flow of solid and gaseous contaminants containing liquid being introduced
from the outside
through said inlet holes (1,21) in said bottom plate of the container (20,37) and said rubber check valve (2,22)
into said filter element (3,27).

6. Separator as claimed in claim 5, characterized in that
said gas removal pipe (17) extends through said bottom plate of the container (20),
whereby the filtered liquid is introduced tangentially
into a portion of the vortex flow camber (11) opposite to its tapered end.

7. Separator as claimed in claim 5, characterized in that
said gas removal pipe (35) extends through a wall of the container (37) opposite to said bottom plate and,
said vortex flow chamber (23) being disposed in the axial centre area of the container (37),
whereby a flow of solid and gaseous contaminants containing liquid is introduced tangentially
into a portion of the vortex flow camber (23) opposite to its tapered end through an inlet pipe (24) provided with a relief valve (38).

## Patentansprüche

1. Integrierte Trennvorrichtung zur Beseitigung von festen und gasförmigen Verunreinigungen aus Flüssigkeiten, mit einem Behälter (20, 37), in der eine Flüssigkeits-Entgasungseinrichtung, die eine Wirbelströmungskammer (11, 23) aufweist, in die Flüssigkeit tangential eingeführt ist, um der Flüssigkeit in dieser eine Wirbelströmung zu verleihen, und wobei ein zentrales Gasabführrohr (17, 35) und ein Filtersystem mit einem Filterelement (3, 27) zur Entfernung von Feststoffen aus der Flüssigkeit angeordnet sind, **dadurch gekennzeichnet**, daß die Wirbelströmungskammer (11, 23) eine konische Gestalt aufweist und eine konische Wandung (12, 25) und Poren (14, 26) in der konischen Wandung (12, 25) besitzt, um durch diese entgaste Flüssigkeit von der konischen Wirbelströmungskammer (11, 23) in einen Raum innerhalb des Behälters (20, 37) außerhalb der Wirbelströmungskammer (11, 23) zu führen, und daß sich das Gasabführrohr (17, 35) von dem Inneren der Wirbelströmungskammer (11, 23) durch die Wandung der Wirbelströmungskammer (11, 23) an ihrem konischen Ende nahe ihrer axialen Mitte erstreckt und kleine Poren (16, 23) aufweist, um gasreiche Flüssigkeit von der Wirbelströmungskammer (11, 23) in das Innere des Gasabführrohrs (17, 35) durch diese hindurch zu führen.

2. Trennvorrichtung nach Anspruch 1, **dadurch gekennzeichnet**, daß die Wirbelströmungskammer (11, 23) einen im wesentlichen konischen Querschnitt aufweist.

3. Trennvorrichtung nach Anspruch 1 oder 2, **dadurch gekennzeichnet**, daß das Filtersystem rund um die Wirbelströmungskammer (11, 23) angeordnet ist.

4. Trennvorrichtung nach zumindest einem der vorhergehenden Ansprüche 1 bis 3, **dadurch gekennzeichnet**, daß ein Entlastungsventil (18, 39) mit dem Filtersystem verbunden ist.

5. Trennvorrichtung nach zumindest einem der vorhergehenden Ansprüche 1 bis 4, **dadurch gekennzeichnet**, daß sie Einlaßöffnungen (1, 21) in der Bodenplatte des Behälters (20, 37) und ein Gummi-Rückschlagventil (2, 22) aufweist und eine Strömung von feste und gasförmige Verunreinigungen enthaltender Flüssigkeit von der Außenseite durch die Einlaßöffnungen (1, 21) in der Bodenplatte des Behälters (20, 37) und das Gummi-Rückschlagventil (2, 22) in das Filterelement (3, 27) eingeführt wird.

6. Trennvorrichtung nach Anspruch 5, **dadurch gekennzeichnet**, daß das Gasabführrohr (17) sich durch die Bodenplatte des Behälters (20) erstreckt, wodurch die gefilterte Flüssigkeit tangential in einen Abschnitt der Wirbelströmungskammer (11) eingeführt wird, der ihrem konischen Ende gegenüberliegt.

7. Trennvorrichtung nach Anspruch 5, **dadurch gekennzeichnet**, daß das Gasabführrohr (35) sich durch eine Wandung des Behälters (37) gegenüberliegend zu der Bodenplatte erstreckt und die Wirbelströmungskammer (23) in dem axialen Mittelbereich des Behälters (37) angeordnet ist, wodurch eine Strömung aus feste und gasförmige Verunreinigungen enthaltender Flüssigkeit tangential durch ein Einlaßrohr (24), versehen mit einem Entlastungsventil (38) in einen Abschnitt der Wirbelströmungskammer (23) eingeführt wird, der ihrem konischen Ende gegenüberliegt.

## Revendications

1. Séparateur intégré destiné à éliminer les impuretés solides et gazeuses contenues dans des liquides, comprenant un récipient (20, 37) dans lequel sont disposés des moyens de dégazage de liquide comprenant une chambre à vortex (11, 23) dans laquelle ledit liquide est introduit tangentiellement pour imprimer un écoulement en vortex audit liquide à l'intérieur, et un tube central (17, 35) d'extraction du gaz, et un système de filtre comprenant un élément filtrant (3, 27) destiné à éliminer les solides du liquide, caractérisé en ce que la chambre à vortex (11, 23) possède une forme à section décroissante et comprend une paroi conique (12, 25) et des pores (14, 26) ménagés dans ladite paroi conique (12, 25) pour laisser passer le liquide dégazé de la chambre à vortex conique (11, 23) dans un espace contenu dans ledit récipient (20, 37) à l'extérieur de ladite chambre à vortex (11, 23), et ledit tube (17, 35) d'extraction du gaz s'étend de l'intérieur de la chambre à vortex (11, 23), à travers la paroi de ladite chambre à vortex (11, 23), à son extrémité effilée, à proximité de son centre axial, et comprend de petits pores (16, 33), pour laisser passer le liquide riche en gaz de la chambre à vortex (11, 23) dans le volume intérieur du tube d'évacuation du gaz (17, 35).

2. Séparateur selon la revendication 1,
caractérisé en ce que
la chambre à vortex (11, 23) a une section sensiblement conique.

3. Séparateur selon la revendication 1 ou 2,
caractérisé en ce que
ledit système de filtre est disposé autour de ladite chambre à vortex (11, 23).

4. Séparateur selon au moins une des revendications précédentes 1 à 3,
caractérisé en ce que
une soupape de sûreté (18, 39) est raccordée au système de filtre.

5. Séparateur selon au moins une des revendications précédentes 1 à 4,
caractérisé en ce que
il comprend
des trous d'entrée (1, 21) dans la plaque de fond du récipient (20, 37),
et un clapet anti-retour (2, 22) en caoutchouc,
un courant de liquide contenant des impuretés solides et gazeuses étant introduit de l'extérieur dans ledit élément filtrant (3, 27) à travers lesdits trous d'entrée (1, 21) pratiqués dans la plaque de fond du récipient (20, 37) et à travers ledit clapet anti-retour (2, 22) en caoutchouc.

6. Séparateur selon la revendication 5 caractérisé en ce que
ledit tube (17) d'extraction de gaz traverse ladite plaque de fond du récipient (20), de sorte que le liquide filtré est introduit tangentiellement dans une portion de la chambre à vortex (23) qui est à l'opposé de son extrémité effilée.

7. Séparateur selon la revendication 5, caractérisé en ce que
ledit tube (35) d'extraction de gaz traverse une paroi du récipient (37) qui est à l'opposé de ladite plaque de fond, et
ladite chambre à vortex (23) étant disposée dans la zone du centre axial du récipient (37),
de sorte qu'un flux de liquide contenant des impuretés liquides et gazeuses est introduit tangentiellement
dans une portion de la chambre à vortex (23) qui est à l'opposé de son extrémité effilée, à travers un tube (24) muni d'une soupape de sûreté (38).
